(19) Europäisches Patentamt
European Patent Office
Office européen des brevets

(11) EP 1 475 140 A1

(12) **EUROPEAN PATENT APPLICATION**

(43) Date of publication:
**10.11.2004 Bulletin 2004/46**

(51) Int Cl.[7]: **B01D 53/86**, B01D 53/94, B01J 23/50, B01J 37/20

(21) Application number: **04010537.1**

(22) Date of filing: **04.05.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **07.05.2003 KR 2003028926**
**27.03.2004 KR 2004020956**

(71) Applicant: **Kocat Inc.**
**Seoul 150-803 (KR)**

(72) Inventors:
- **Kim, Du-Soung**
  **Songpagu Seoul 138-222 (KR)**
- **Lee, Jihn-Koo**
  **Seosansi Chungcheongnam-do 356-070 (KR)**
- **Kha, Myoung-Jin**
  **Seosan-si Chungcheongnam-do 356-020 (KR)**
- **Lee, Seung-Jae**
  **Haemi-myeon Seosan-si**
  **Chungcheongnam-do (KR)**

(74) Representative: **Eisenführ, Speiser & Partner**
**Patentanwälte Rechtsanwälte**
**Postfach 10 60 78**
**28060 Bremen (DE)**

(54) **Catalyst and process for nitrogen oxides reduction in combustion exhaust gas**

(57) Disclosed is a method of effectively removing nitrogen oxides contained in exhaust gas from a combustion process with stationary source and mobile source using gases or liquid oils, such as gasoline, kerosene or bio-diesel oil as a fuel. More particularly, there are provided an apparatus and a method of removing nitrogen oxides, in which a reducing agent is sprayed into the exhaust gas passing through an alumina-promoted silver catalyst installed at a flow path of exhaust gas.

FIG. 2

8
10
4
10
2
6
24
24
22
18
18
16
20
12
14

EP 1 475 140 A1

## Description

### Technical Field

Generally the present invention relates to a method of treating nitrogen oxides (NOx, $N_2O$) contained in exhaust gas from a combustion process of stationary source and mobile source using gases or liquid oils, such as gasoline, kerosene or bio-diesel oil as fuels. Particularly the present invention relates to an apparatus and a method of treating nitrogen oxides where an alumina-promoted silver catalyst is installed in a flow path of exhaust gas and a reducing agent is sprayed into the exhaust gas passed through the catalyst.

### Background Art

As well known to those skills in the art, a kind of nitrogen compounds contained in combustion exhaust gas varies sensitively depended on a type of fuel and operational conditions of an engine. Selective catalytic reduction (SCR) process is used as a conventional process for removing nitrogen oxides, in which nitrogen dioxides are broken down into nitrogen and water with a reducing agent in the presence of a catalyst. At this time, ammonia is widely used as the reducing agent in the selective catalytic reduction process since it has an excellent catalytic reactivity and selectivity.

For example, U.S. Pat. No. 5,024,981 discloses an $NH_3$-SCR process of selectively removing nitrogen oxides contained in exhaust gas with a honeycomb-structured catalyst, in which an active material, comprising vanadium or tungsten, is supported by a titania carrier.

As ammonia is a very toxic gas, leakage to the air can cause serious environmental pollution. Accordingly, an allowable limit of ammonia is significantly lower (5 ppm or lower) than that of nitrogen oxides.

For this reason, practically, after a quantity of nitrogen oxides contained in the exhaust gas is measured by an analyzer, corresponding ammonia amount to nitrogen oxides is sprayed into the exhaust gas to reduce nitrogen oxides. However, it is difficult to effectively reduce nitrogen oxides if the concentrations of nitrogen oxides are varied. Also in the case of spraying ammonia into the exhaust gas after a quantity of nitrogen oxides is analyzed, undesirably a time lag occurs, causing an ammonia-slip phenomenon, in which nitrogen oxides and unused ammonia passes through a catalytic bed without reacting with each other.

A molar ratio of ammonia to nitrogen oxides may be controlled to 1 or lower to minimize the ammonia-slip phenomenon. However, control of the molar ratio of ammonia to nitrogen oxides cannot overcome the above mentioned disadvantages.

Meanwhile, in accordance with the recent trend of large-sized buildings and amusement facilities, an independent electric power plant for a stable electricity supply is installed in the buildings and amusement facilities.

In this regard, ammonia may be used as the reducing agent to reduce nitrogen oxides discharged from the independent electric power plant. However, use of ammonia is strictly limited because large-scaled accidents having relation to environmental pollution may occur due to the leakage of ammonia.

Recently, an HC-SCR (hydrocarbon SCR) process using hydrocarbons as a reducing agent is being used to overcome disadvantages of the $NH_3$-SCR process.

For example, an HC-SCR process using propane as a reducing agent is suggested in U.S. Pat. No. 5,993,764 that is not commercialized because of the low removal activity of nitrogen oxides. U.S. Pat. Nos. 5,824,621 and 6,284,211 B1 disclose an ethanol-SCR process of converting nitrogen oxides into nitrogen using ethanol as a reducing agent in the presence of a silver catalyst, which is being commercialized because ethanol has relatively high removal effect of nitrogen oxides in comparison with other hydrocarbon-based reducing agents.

### Disclosure of the Invention

Accordingly, the present invention has been made keeping in mind the above problems occurring in the prior art. An object of the present invention is to provide a catalyst for reducing nitrogen oxides contained in exhaust gas from a combustion process of stationary source and mobile source.

Another object of the present invention is to provide an apparatus for removing nitrogen oxides contained in exhaust gas from a combustion process of stationary source and mobile source, in which reducing agent is injected into the exhaust gas passed through an alumina-promoted silver catalyst installed in a flow path of exhaust gas.

It is still another object of the present invention to provide a method of removing nitrogen oxides contained in exhaust gas from a combustion process of a stationary and a mobile source.

In order to accomplish the above object, the present invention provides an alumina-promoted silver catalyst for removing nitrogen oxides.

Further, the present invention provides an apparatus for treating nitrogen oxides, including an inlet pipe to receive exhaust gas. A reactor includes one or more nozzles connected to the inlet pipe to spray air and reducing agent to the exhaust gas passing the reactor through the inlet pipe, and at least one catalytic bed installed at the rear of the nozzle to reduce nitrogen oxides from the exhaust gas laden with the reducing agent. A storage tank stores therein the reducing agent to be sprayed by the nozzle, and an injection pump is installed between the storage tank and the nozzle to transport the reducing agent from the storage tank to the nozzle. Additionally, an air pump is connected with the nozzle to feed air into the nozzle. An outlet pipe discharges the exhaust gas that passes through and is treated by the catalytic bed.

Furthermore, the present invention provides a method of treating exhaust gas, including the steps of injecting a reducing agent into the exhaust gas containing nitrogen oxides from a combustion process of stationary source or mobile source, and of passing the treated exhaust gas through a catalytic bed to reduce nitrogen oxides contained in the exhaust gas.

Meanwhile, the nitrogen oxides in the present invention, in general, means the compounds including NOx (NO, $NO_2$) and $N_2O$. It should be understood that the word "reducing" as used herein is to reduce nitrogen oxides contained in exhaust gas, generally has the same meaning as removing nitrogen oxides.

## Brief Description of the Drawings

The objects, features and other advantages of the present invention will be more clearly understood from the following detailed description taken in conjunction with the accompanying drawings, in which:

FIG. 1 illustrates an apparatus for treating nitrogen oxides according to an embodiment of the present invention;
FIG. 2 illustrates another aspect of the apparatus for treating nitrogen oxides according to the embodiment of the present invention;
FIG. 3 is a graph showing the conversion efficiency of nitrogen oxides as a function of the temperature of exhaust gas excluding sulfur dioxide;
FIG. 4 is a graph showing the conversion efficiency of nitrogen oxides as a function of the temperature of the exhaust gas including sulfur dioxide;
FIG. 5 is a graph showing the conversion efficiency of nitrogen oxides in the case of using a sulfuric acid-treated catalyst;
FIG. 6 is a graph showing the conversion efficiency of nitrogen oxides with the use of a sulfuric acid-treated catalyst and without the use of a sulfuric acid-treated catalyst;
FIG. 7 is a graph showing the conversion efficiency of nitrogen oxides in accordance with a molar ratio of ethanol to nitrogen oxides in the case of spraying ethanol into the exhaust gas according to the single injection manner;
FIG. 8 is a graph showing the conversion efficiency of nitrogen oxides in accordance with a molar ratio of ethanol to nitrogen oxides in the case of spraying ethanol into the exhaust gas according to a double-injection manner;
FIG. 9 is a graph showing the conversion efficiency of nitrogen oxides in accordance with a fuel used in a stationary source in the case of spraying ethanol to the exhaust gas according to the double-injection manner; and
FIG. 10 is a graph showing the generation efficiency of $N_2O$ in accordance with a fuel used in a stationary source in the case of spraying ethanol to the exhaust gas according to the double-injection manner.

## Best Mode for Carrying Out the Invention

According to the present invention, a catalyst for reducing nitrogen oxides comprising silver and alumina($Ag/Al_2O_3$), and the catalyst can be used to reduce nitrogen oxides after being treated by sulfuric acid. In this case, after treated by sulfuric acid, the catalyst includes sulfates and exists in the form of $Ag/Al_2O_3\text{-}SO_4^{2-}$.

Meanwhile, it is preferable that the alumina carrier has an amorphous, gamma-type, theta-type, or eta-type crystalline structure in order to reduce nitrogen oxides easily. In the use of the catalyst, the alumina carrier is capable of having various crystalline structures, as described above, which is coated on a honeycomb body, and preferably on a cordierite honeycomb body. Additionally, the content of the alumina carrier is preferably 0.05 to 0.3 g/cm$^3$ based on the whole catalyst. When the content of the alumina carrier is less than 0.05 g/cm$^3$, catalytic activity is greatly reduced. On the other hand, when the content is more than 0.3 g/cm$^3$, catalytic activity no longer increases. In this regard, a "catalytic bed" designates the honeycomb body, coated by the catalyst and installed in the apparatus for treating nitrogen oxides.

In the present invention, silver is provided in the form of reduced silver (Ag°), silver oxide (AgO), silver chloride (AgCl), silver nitrate ($AgNO_3$), silver sulfate ($Ag_2SO_4$), or a mixture thereof. At this time, an amount of silver is preferably 1 to 10 wt% based on the alumina carrier. The reason is that when the amount of silver is less than 1 wt%, catalytic activity is greatly reduced. On the other hand, when the amount of silver is more than 10 wt%, catalytic activity no longer increases.

Meanwhile, if necessary, the catalyst for removing nitrogen oxides according to the present invention may be placed in a 0.01 to 1M sulfuric acid aqueous solution to sulfuric acid-treat the catalyst. That is to say, the catalyst is used in the form of $Ag/Al_2O_3$-$SO_4^{2-}$, which includes sulfates.

When the alumina-promoted silver catalyst is used to reduce nitrogen oxides after being placed in the 0.01 to 1M sulfuric acid aqueous solution, removal activity of nitrogen oxides of the resulting catalyst is greatly improved at a predetermined temperature range. For example, a temperature range of 250 to 500°C, and the poisoning resistance of the catalyst to sulfur dioxide is improved.

Alternatively, instead of placing the catalyst in a sulfuric acid aqueous solution, sulfur dioxide may be continuously injected into the alumina-promoted silver catalyst to treat the catalyst with sulfuric acid. In this regard, the sulfuric acid-treated catalyst using sulfur dioxide has similar catalytic activity to the sulfuric acid-treated catalyst using a sulfuric acid aqueous solution.

In the present invention, the term "sulfuric acid-treated" means that the catalyst is placed in a sulfuric acid aqueous solution, or continuously injected by sulfur dioxide.

Moreover, it should be understood that the word "catalyst" as used herein is intended to include not only the alumina-promoted silver catalyst, but also the honeycomb body on which silver is coated.

Hereinafter, a description of a method of producing the catalyst for reducing nitrogen oxides according to the present invention will be given. At this time, the method is well known to those skilled in the art.

Because it is preferable that the catalyst of the present invention is coated on the honeycomb body, the method will be described of producing the catalyst coated on the honeycomb body.

The method of producing the catalyst according to the present invention includes the steps of slowly adding alumina to ion-exchanged water with strong agitation to produce homogeneous slurry; coating such slurry on the honeycomb body, preferably on the cordierite honeycomb body, more preferably on the cordierite honeycomb body with a size of about 15 × 15 × 10 cm and a cell density of about 200 cells/in$^2$ (84 x 84 cells); firstly drying the coated honeycomb body at room temperature for about 24 hours; drying the firstly dried honeycomb body at about 120°C for about 4 hours and then heating the dried honeycomb body at a rate of about 10°C/min to 500 to 700°C and calcining the heated honeycomb body at 500 to 700°C for about 2 hours; drying the calcined honeycomb body at room temperature for about 24 hours after placing the calcined honeycomb body in a solution such as silver chloride (AgCl), silver nitrate ($AgNO_3$), silver sulfate ($Ag_2SO_4$), or a mixture thereof; drying the calcined honeycomb body at about 120°C for about 4 hours and then heating the calcined honeycomb body at a rate of about 10°C/min to 500 to 700°C; and calcining again the calcined honeycomb body at 500 to 700°C for about 2 hours.

In the present invention, if necessary, the catalyst for removing nitrogen oxides is placed in an acidic solution, such as 0.01 to 1 M sulfuric acid aqueous solution, dried at room temperature for about 24 hours. The next step is to dry the catalyst at about 120°C for about 4 hours, then heat at a rate of about 10°C/min to 500 to 700°C, and finally, calcine at 500 to 700°C for about 2 hours, thereby accomplishing the sulfuric acid-treated catalyst according to the present invention.

In the apparatus for treating nitrogen oxides according to the present invention, the exhaust gas discharged from combustion process of stationary source and/or mobile source, preferably a combustion process of stationary source and/or mobile source using gases or gasoline used as fuel contains lower content of sulfur oxides, such as sulfur dioxide than the exhaust gas from the combustion process of the stationary source or mobile source using coal as fuel.

Reducing agent according to the present invention is sprayed into the exhaust gas with air through the nozzle to reduce nitrogen oxides contained in the exhaust gas into nitrogen and water. At this time, a molar ratio of the reducing agent to nitrogen oxides contained in the exhaust gas is at least 0.1 or above.

In this regard, the reducing agent for reducing nitrogen oxides to nitrogen may be any substance including hydrocarbons, such as unsaturated hydrocarbon and heterogeneous hydrocarbon, and preferably ethanol.

Meanwhile, air allows the reducing agent to be widely sprayed from the nozzles into the exhaust gas. Any gas can be used instead of air as long as it is inert and does not react with the reducing agent. However, it is preferable that the above air is used in conjunction with the reducing agent in consideration of its price and easiness in obtaining it.

Reference should now be made to the drawings, in which the same reference numerals are used throughout the different drawings to designate the same or similar components.

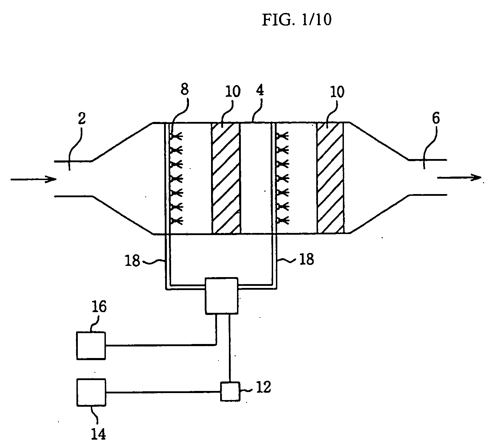

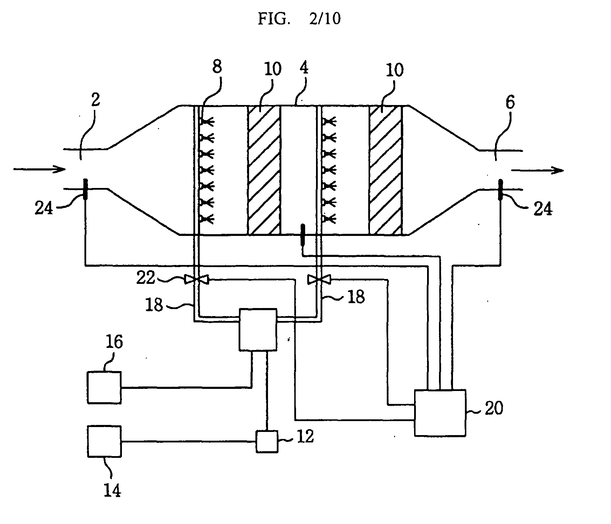

FIG. 1 illustrates an apparatus for treating nitrogen oxides according to the embodiment of the present invention. FIG. 2 illustrates another aspect of an apparatus for treating nitrogen oxides according to the embodiment of the present invention.

With reference to FIGs. 1 and 2, the apparatus for treating nitrogen oxides according to the present invention includes an inlet pipe 2 to receive exhaust gas, acting as a flow path for exhaust gas containing nitrogen oxides from stationary source and mobile source, preferably the combustion process of stationary source and mobile source using gases or liquid oils, such as gasoline, kerosene or bio-diesel oil as fuel. A reactor 4 includes one or more nozzles 8 which are connected to the inlet pipe 2 to spray air and a reducing agent to the exhaust gas passing the reactor 4 through the inlet pipe 2, and one or more catalytic beds 10 installed at the rear of the nozzles 8 to reduce nitrogen oxides from the exhaust gas laden with the reducing agent. A storage tank 14 stores therein the reducing agent to be sprayed by the nozzles 8, and an injection pump 12 is installed between the storage tank 14 and the nozzles 8 to transport the reducing agent from the storage tank 14 to the nozzles 8. Additionally, an air pump 16 is connected to the nozzles 8 to feed air into the nozzles 8. An outlet pipe 6 discharges the exhaust gas after the exhaust gas passes through and is treated by the catalytic beds 10.

The reactor 4 is defined as a space in which the nozzles 8 and catalytic beds 10 are installed to reduce nitrogen oxides contained in the exhaust gas.

At this time, the nozzles 8 and catalytic beds 10 are installed in the reactor 4 in such a way that a tube, including the nozzles 8, is positioned at the front of each catalytic bed 10 based on a flow direction of the exhaust gas. In the case of installing one or more tubes and catalytic beds 10 in the reactor 4, the tube pairs with a catalytic bed 10 and the tube and catalytic bed 10 are alternately positioned in the reactor 4.

The inlet pipe 2, according to the present invention, is connected to the stationary or mobile source at the beginning part thereof to receive the exhaust gas containing nitrogen oxides from the combustion process of the stationary or mobile source, and sequentially connected to the reactor 4 and the outlet pipe 6 at the ending part thereof to reduce nitrogen oxides contained in the exhaust gas and discharge the treated exhaust gas through the outlet pipe.

The nozzles 8 according to the present invention are installed in the reactor 4 to spray air and the reducing agent to the exhaust gas containing nitrogen oxides that pass through the reactor 4. In this regard, the nozzles 8 may be installed in any manner in the reactor 4 so long as the air and the reducing agent are desirably sprayed into the exhaust gas. Preferably, the nozzles 8 can be installed in the reactor 4 in a single- or multi-injection manner to easily spray air and reducing agent into the exhaust gas containing nitrogen oxides at 200 to 500°C through the reactor 4.

It is called a single-injection manner when a single tube 18 is structured such that a plurality of holes is formed on a surface of the tube 18 and the nozzles 8 are connected to the holes. In the case of the multi-injection manner, two or more tubes as described above are installed in the reactor 4.

According to the multi-stage injection manner, when a hydrocarbon-based reducing agent, such as ethanol, is injected into the reactor 4, it is judged whether an amount of the reducing agent consumed during the reduction of nitrogen oxides due to the oxidation of the reducing agent against the amount of the sprayed reducing agent is proper or not. Thus, the multi-stage injection manner has higher removal activity of nitrogen oxides than that of the single-stage injection manner compared at the same amount of the reducing agent used in the multi-stage injection manner.

Meanwhile, if necessary, the apparatus for treating nitrogen oxides according to the present invention may further comprise valves 22 installed in the tubes 18 to control a flow rate of a fluid passing through each of the tubes 18. One or more concentration sensors 24 are installed in the inlet pipe 2, the reactor 4, or the outlet pipe 6 to sense the concentration of nitrogen oxides that exist in the exhaust gas flowing through inlet pipe 2, the reactor 4, and the outlet pipe 6. A control unit 20 connected to the valves 22 and concentration sensors 24 to control the valves 22 based on concentration data from the concentration sensors 24 may also be installed.

In the present invention, the concentration sensors 24 can be installed at any points in the inlet pipe 2, the reactor 4, and the outlet pipe 6 so long as the concentration of the exhaust gas flowing in the inlet pipe 2, the reactor 4, and the outlet pipe 6 are easily measured.

Meanwhile, if necessary, the nozzles 8 and an outer surface of each of the tubes 18 connected to the nozzles 8 constituting the apparatus of the present invention may be insulated by an insulating material so as to prevent the exhaust gas at 200 to 500°C from combusting the reducing agent ahead. Additionally, cool air may be fed through the nozzles 8 and/or tubes 18 that are covered by insulating material, to effectively prevent the reducing agent passing through the nozzles 8 and the tubes 18 from being combusted by the high temperature of the exhaust gas.

As described above, the nozzles 8 functioning to spray air and the reducing agent are connected to the air pump 16 that compresses air that is supplied from the atmosphere. The nozzles 8 are also sequentially connected to the injection pump 12 that feeds the reducing agent to the nozzles 8, and the storage tank 14 that stores the reducing agent therein. In this regard, the injection pump 12, acts as a power source to feed the reducing agent from storage tank 14 to the nozzles 8.

In the present invention, the air pump 16 supplies the compressed air with reducing agent into the nozzles 8. This contributes to injecting the reducing agent at a high pressure into the reactor 4 to readily mix the exhaust gas containing nitrogen oxides with the reducing agent.

Hereinafter, a description will be given of the operation of the apparatus according to the present invention.

The exhaust gas containing nitrogen oxides from the combustion process of the stationary source and mobile source using gas or liquid oil, such as gasoline, kerosene or bio-diesel oil as fuel is fed through the inlet pipe 2 into the reactor 4 which includes the nozzles 8 and catalytic beds 10.

The reducing agent stored in the storage tank 14 is then fed into the nozzles 8 by the injection pump 12, and air is simultaneously fed into the nozzles 8 by air pump 16.

Additionally, the air and the reducing agent fed into the nozzles 8 positioned in the reactor 4 are sprayed into the exhaust gas containing nitrogen oxides passing through the reactor 4.

Further, the exhaust gas mixed with the reducing agent passes through the catalytic beds 10 positioned at the rear of the nozzles 8 to reduce nitrogen oxides contained in the exhaust gas to nitrogen.

Furthermore, the treated exhaust gas is discharged through the outlet pipe 6 connected to the ending part of the reactor 4.

In this regard the air compressed by the air pump 16 is fed in conjunction with the reducing agent into the nozzles 8 that contribute to spraying the reducing agent at a high pressure into the exhaust gas to readily mix the exhaust gas containing nitrogen oxides with the reducing agent.

Meanwhile, the apparatus for treating the exhaust gas according to the present invention may include the concentration sensors 24 for sensing a concentration of nitrogen oxides contained in the exhaust gas, and can effectively treat the exhaust gas using the control unit 20 that controls the valves 22 based on the concentration data measured by the concentration sensors 24.

As described above, the apparatus is structured such that one or more tubes 18, each including a plurality of nozzles 8, are installed in the reactor 4, each tube 18 is connected to the injection pump 12 and air pump 16, and at least one concentration sensor 24 is installed in the inlet pipe 2, the reactor 4, and the outlet pipe 6.

In this regard, the valves 22 that control the degree of opening and closing of the tubes are installed in the tubes 18, and the valves 22 and the concentration sensors 24 are connected to the control unit 20.

When the exhaust gas containing nitrogen oxides is discharged from the combustion process of the stationary source and mobile source using the gase or liquid oil, such as gasoline, kerosene or bio-diesel oil as fuel, it is fed into the reactor 4 through the tubes 18, each including a plurality of nozzles 8.

In the present invention, the concentration of nitrogen oxides contained in the exhaust gas is measured by the concentration sensors 24 installed in the inlet pipe 2, the reactor 4, and the outlet pipe 6, which can transmit the concentration data to the control unit 20.

After the removal activity rate of nitrogen oxides by the catalytic beds 10 is estimated based on the concentration data output from the concentration sensors 24, the control unit 20 opens the valve 22 of a tube 18 positioned at the front of the poisonous catalytic bed 10 but closes the valve 22 of another tube 18 positioned at the front of the non-poisonous catalytic bed 10.

The reducing agent stored in the storage tank 14 is then fed into the tube 18, of which the valve 22 is opened, using the injection pump 12, and atmospheric air is fed in conjunction with the reducing agent into the tube 18, of which the valve 22 is opened, using the air pump 16.

Additionally, the air and the reducing agent fed into the tube 18, of which the valve 22 is opened, are sprayed to the exhaust gas containing nitrogen oxides flowing in the reactor 4 through the nozzles 8 of the tube 18.

Further, the exhaust gas mixed with the reducing agent passes through the catalytic beds 10 positioned at the rear of the nozzles 8 to reduce nitrogen oxides contained in the exhaust gas into nitrogen.

Subsequently, the treated exhaust gas is discharged through the outlet pipe 6 connected to the ending part of the reactor 4. At this time, the air compressed by the air pump 16 is fed in conjunction with the reducing agent into the nozzles 8 to contribute to readily mixing the exhaust gas with the reducing agent.

A better understanding of the present invention may be obtained through the following example which is set forth to illustrate, but it is not to be construed as to limit of the present invention.

## EXAMPLE 1

### Production of the catalytic bed

Alumina [Spheralite 557, Exxons, France] was slowly added to ion-exchanged water with strong agitation to produce homogeneous slurry.

The slurry thus produced was coated on the cordierite honeycomb body [Facktop Kocat, China] with a size of $15 \times 15 \times 10$ cm and cell density of 200 cells/in$^2$ (84 x 84 cells) so that a ratio of alumina to the cordierite honeycomb body was 0.111 g/cm$^3$, and dried at room temperature for 24 hours.

The dried honeycomb body was again dried at 120°C for 4 hours and then heated at a rate of 10°C/min to 600°C, and calcined at 600°C for 2 hours.

The calcined honeycomb body on which alumina was coated was placed in the silver nitrate aqueous solution ($AgNO_3$)[Hangyeol Gold, Korea] so that the silver content in the resulting honeycomb body was 2.1 wt% based on alumina, and dried at room temperature for 24 hours.

The resulting honeycomb body was then dried at 120°C for 4 hours, heated at a rate of 10°C/min to 600°C, and calcined at 600°C for 2 hours, thereby accomplishing the sulfuric acid-treated catalytic bed according to the present invention.

EXAMPLE 2

Production of the catalytic bed

The procedure of example 1 was repeated with the exception that the ratio of alumina to the cordierite honeycomb body was 0.123 g/cm$^3$ instead of 0.111 g/cm$^3$, and the silver content in the resulting honeycomb body was 5.0 wt% instead of 2.1 wt% based on alumina.

EXAMPLE 3

Production of the catalytic bed

The procedure of example 1 was repeated except that the ratio of alumina to the cordierite honeycomb body was 0.149 g/cm$^3$ instead of 0.111 g/cm$^3$, and the silver content in the resulting honeycomb body was 6.0 wt% instead of 2.1 wt% based on alumina.

EXAMPLE 4

Production of the sulfuric acid-treated catalytic bed

The catalytic bed produced according to example 2 was placed in 0.1 M sulfuric acid aqueous solution [sulfuric acid, Duk-san Pharmaceutical Industry Co. Ltd., Korea], and dried at room temperature for 24 hours.
The dried catalytic bed was again dried at 120°C for 4 hours, heated at a rate of 10°C/min to 500°C, and calcined at 500°C for 2 hours to produce the sulfuric acid-treated catalytic bed.
The produced sulfuric acid-treated catalytic bed had a ratio of alumina to the honeycomb body of 0.123 g/cm$^3$, a silver content in the resulting catalytic bed of 5.0 wt% based on alumina, and a sulfate ($SO_4^{2-}$) content in the resulting catalytic bed of 1 wt% based on alumina.

EXAMPLE 5

Production of the sulfuric acid-treated catalytic bed

The procedure of example 4 was repeated except that 0.21 M sulfuric acid aqueous solution was used instead of 0.1 M sulfuric acid aqueous solution.
The produced sulfuric acid-treated catalytic bed had a ratio of alumina to the honeycomb body of 0.123 g/cm$^3$, a silver content in the resulting catalytic bed of 5.0 wt% based on alumina, and a sulfate ($SO_4^{2-}$) content in the resulting catalytic bed of 2 wt% based on alumina.

EXAMPLE 6

Production of the sulfuric acid-treated catalytic bed

The procedure of example 4 was repeated except that 0.42 M sulfuric acid aqueous solution was used instead of 0.1 M sulfuric acid aqueous solution.
The resulting sulfuric acid-treated catalytic bed had a ratio of alumina to the honeycomb body of 0.123 g/cm$^3$, a silver content in the resulting catalytic bed of 5.0 wt% based on alumina, and a sulfate ($SO_4^{2-}$) content in the resulting catalytic bed of 4 wt% based on alumina.

EXAMPLE 7

As shown in FIG. 1, a rectangular reactor [Gibo Co., Korea] made of SUS 304 with a height of 15 cm, a width of 15 cm, and a length of 100 cm was provided, and a tube with a plurality of nozzles [TN050-SRW, Total nozzle Co., Korea] was installed in the reactor.
The catalytic bed was installed according to example 1 at the rear of the tube having a plurality of nozzles in the reactor.
Ethanol [Duk-san Pharmaceutical Industry Co. Ltd., Korea] acting as the reducing agent was charged into a storage tank, the storage tank was connected to an injection pump [M930, Younglin Co., Korea], which was connected to the tube with the nozzles.

An air pump [HP 2.5, Air bank compressor Co., Korea] was then connected to the tube with the nozzles to feed the compressed air into the reactor.

Exhaust gas discharged from a LPG (liquefied petroleum gas) burner [Eg02.9R, Elco, Germany] of a boiler [Jewoo royal steam boiler, Jewoo energy, Korea] and nitrogen monoxide [Metson, USA] were fed into the reactor, and the flow rate of the exhaust gas and nitrogen monoxide was controlled by using a mass flow controller [F-201C-FAC-22-V, Bronchost, Netherlands].

The flow rate and the composition of the exhaust gas were described in Table 1, below.

TABLE 1

| Flow rate and composition of the exhaust gas | | | | |
|---|---|---|---|---|
| Flow rate | Composition | | | |
| | NOx | CO | $H_2O$ | $O_2$ |
| $90 Nm^3h^{-1}$ | 700 ppm | 1400 ppm | 6 % | 11 % |

Meanwhile, when the exhaust gas fed into the reactor passed through the inlet pipe, high pressure air and ethanol were simultaneously fed to the nozzles using both the air pump and injection pump so as to be sprayed into the exhaust gas passing through the reactor.

At this time, the molar ratio of ethanol to nitrogen oxides fed into the reactor was controlled at 1, and a K-type thermocouple was installed in the reactor to measure the temperature in the reactor.

In this regard, reaction conditions were controlled in such a way that the temperature in the reactor was 100 to 550°C and the space velocity was $20,000h^{-}$

The space velocity was calculated using the following equation 1.

Equation 1

$$space\ velocity\ (SV,\ h^{-1}) = \frac{flow\ rate\ of\ exhaust\ gas\ (Nm^3\ /\ hr)}{volume\ of\ catalyst\ (m^3)}$$

Furthermore, the concentration of the exhaust gas was analyzed by a portable nitrogen oxides analyzer[MK 2, Eurotron, Italy] before and after the reaction of nitrogen oxides with ethanol, and the following Equation 2 calculated conversion efficiency of nitrogen oxide.

Equation 2

Equation 2

$$NOx\ convers.(\%) = \left[\frac{NOx\ conc.\ before\ reaction - NOx\ conc.\ after\ reaction}{NOx\ conc.\ before\ reaction}\right] \times 100(\%)$$

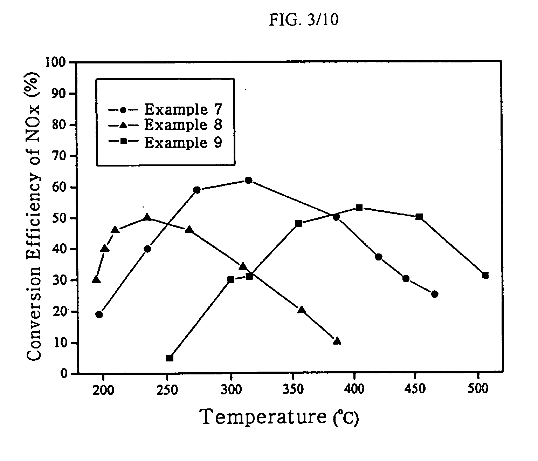

The results are shown in FIG. 3.

EXAMPLE 8

The procedure of example 7 was repeated except that the catalytic bed according to example 2 was used instead of using the catalytic bed according to example 1.

The results are shown in FIG. 3.

EXAMPLE 9

The procedure of example 7 was repeated except that the catalytic bed according to example 5 was used instead of using the catalytic bed according to example 1.
The results are shown in FIG. 3.
From FIG. 3, it could be seen that the temperature range at which nitrogen oxides were maximally reduced varied with the alumina and silver amount contained in the catalytic beds when examples 7 and 8 were compared with each other. Additionally, in comparison of examples 7 and 9, the temperature range at which nitrogen oxides were maximally reduced was shifted to high temperatures when the catalytic beds were sulfuric acid-treated.

EXAMPLE 10

The procedure of example 7 was repeated except that a gasoline burner [OM-1, Olympia Co., Korea] was used instead of the LPG burner of the boiler, the molar ratio of ethanol to nitrogen oxides was 2, the temperature in the reactor ranged from 200 to 550°C. At this time, the space velocity was 20,000$h^{-1}$.
The flow rate and the composition of the exhaust gas were described in Table 2, below.

TABLE 2

| Flow rate and composition of the exhaust gas | | | | | |
|---|---|---|---|---|---|
| Flow rate | Composition | | | | |
| | NOx | CO | $H_2O$ | $O_2$ | $SO_2$ |
| 90 $Nm^3h^{-1}$ | 700 ppm | 1400 ppm | 6 % | 11 % | 50 ppm |

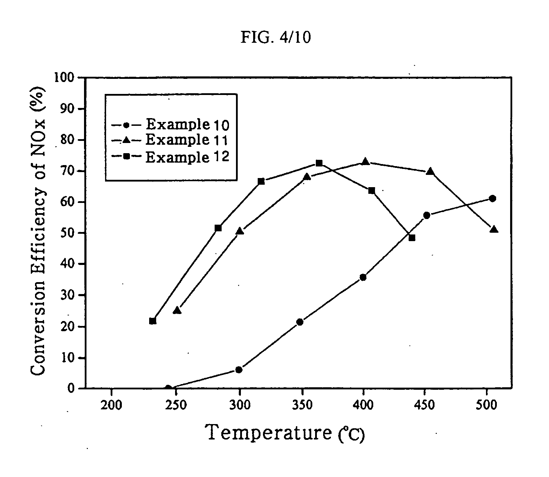

The results are shown in FIG. 4.

EXAMPLE 11

The procedure of example 7 was repeated except that the catalytic bed according to example 2 was used instead of the catalytic bed according to example 1, the gasoline burner was used instead of the LPG burner of the boiler, the molar ratio of ethanol to nitrogen oxides was 2, the temperature in the reactor ranged from 200 to 550°C. At this time, the space velocity was 20,000$h^{-1}$.
The composition of the exhaust gas fed into the reactor was described in Table 2. The results are shown in FIG. 4.

EXAMPLE 12

The procedure of example 7 was repeated that except the catalytic bed according to example 3 was used instead of the catalytic bed according to example 1, the gasoline burner was used instead of the LPG burner of the boiler, the molar ratio of ethanol to nitrogen oxides was 2, the temperature in the reactor ranged from 200 to 550°C. At this time, the space velocity was 20,000$h^{-1}$.
The composition of the exhaust gas fed into the reactor was described in Table 2. The results are shown in FIG.4.

EXAMPLE 13

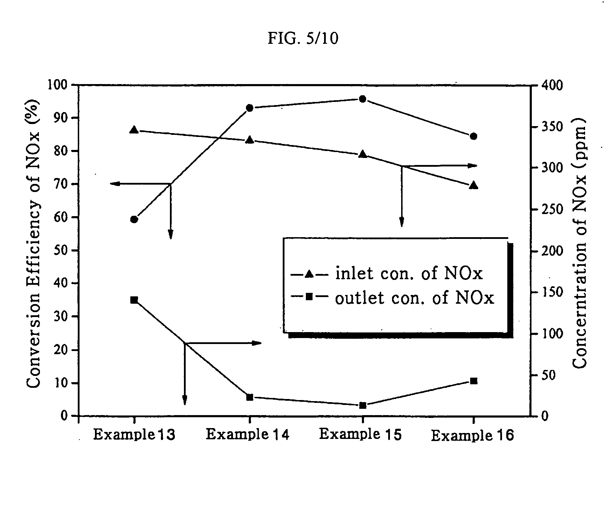

The procedure of example 7 was repeated except that an internal combustion power plant [5.6MW, 14PC 2.5V DF, Nikata, Japan] using 90% LNG + 10% gasoline as a fuel was used instead of the LPG burner of the boiler, the molar ratio of ethanol to nitrogen oxides was 2, and the reactor temperature was 450°C. At this time, the flow rate of the exhaust gas was controlled in such a way that the space velocity was 20,000$h^{-1}$ at a hybrid mode (90% LNG + 10% gasoline) in which the composition and concentration of the exhaust gas were stable after the internal combustion power plant was operated.
The flow rate and the composition of the exhaust gas fed into the reactor were described in Table 3. The results are shown in FIG. 5.

TABLE 3

| Flow rate and composition of the exhaust gas | | | | | |
|---|---|---|---|---|---|
| Flow rate | Composition | | | | |
| | NOx | CO | $H_2O$ | $O_2$ | $SO_2$ |
| 90 $Nm^3h^{-1}$ | 700 ppm | 1000 ppm | 6 % | 10% | 15 ppm |

EXAMPLE 14

The procedure of example 7 was repeated with the exception that the catalytic bed according to example 4 was used instead of the catalytic bed according to example 1, the internal combustion power plant using 90% LNG + 10% gasoline as the fuel was used instead of the LPG burner of the boiler, the molar ratio of ethanol to nitrogen oxides was 2, the reactor temperature was 450°C. At this time, the flow rate of the exhaust gas was controlled in such a way that the space velocity was 20,000$h^{-1}$ at a hybrid mode (90% LNG + 10% gasoline) in which the composition and concentration of the exhaust gas were stable after the internal combustion power plant was operated.

The composition of the exhaust gas fed into the reactor was described in Table 3. The results are shown in FIG. 5.

EXAMPLE 15

The procedure of example 7 was repeated except that the catalytic bed according to example 5 was used instead of the catalytic bed according to example 1, the internal combustion power plant using 90% LNG + 10% gasoline as the fuel was used instead of the LPG burner of the boiler, the molar ratio of ethanol to nitrogen oxides was 2, and the reactor temperature was 450°C. At this time, the flow rate of the exhaust gas was controlled in such a way that the space velocity was 20,000$h^{-1}$ at a hybrid mode (90% LNG + 10% gasoline) in which the composition and concentration of the exhaust gas were stable after the internal combustion power plant was operated.

The composition of the exhaust gas fed into the reactor was described in Table 3. The results are shown in FIG. 5.

EXAMPLE 16

The procedure of example 7 was repeated except that the catalytic bed according to example 6 was used instead of the catalytic bed according to example 1, the internal combustion power plant using 90% LNG + 10% gasoline as the fuel was used instead of the LPG burner of the boiler, the molar ratio of ethanol to nitrogen oxides was 2, and the reactor temperature was 450°C. At this time, the flow rate of the exhaust gas was controlled in such a way that the space velocity was 20,000$h^{-1}$ at a hybrid mode (90% LNG + 10% gasoline) in which the composition and concentration of the exhaust gas were stable after the internal combustion power plant was operated.

The composition of the exhaust gas fed into the reactor was described in Table 3. The results are shown in FIG. 5.

As shown in FIG. 5, it could be observed that the conversion efficiency of nitrogen oxides contained in the exhaust gas from the stationary source and mobile source using a mixed fuel (90% LNG + 10% gasoline) varied with the quantity of sulfuric acid treating the catalytic beds. The result was that the catalytic beds according to examples 4 and 5 had a relatively high conversion efficiency of nitrogen oxides, and the catalytic beds according to examples 4 to 6 produced by treating the catalytic bed according to example 2 with sulfuric acid improved conversion efficiency of nitrogen oxides due to increasing disperse rate of silver in alumina carrier.

EXAMPLE 17

The procedure of example 7 was repeated except that the catalytic bed according to example 2 was used instead of the catalytic bed according to example 1, the internal combustion power plant using 90% LNG + 10% gasoline as the fuel was used instead of the LPG burner of the boiler, the molar ratio of ethanol to nitrogen oxides was 2, and the reactor temperature ranged from 200 to 550°C. At this time, the flow rate of the exhaust gas was controlled in such a way that the space velocity was 20,000$h^{-1}$ at a hybrid mode (90% LNG + 10% gasoline) in which the composition and concentration of the exhaust gas were stable after the internal combustion power plant was operated.

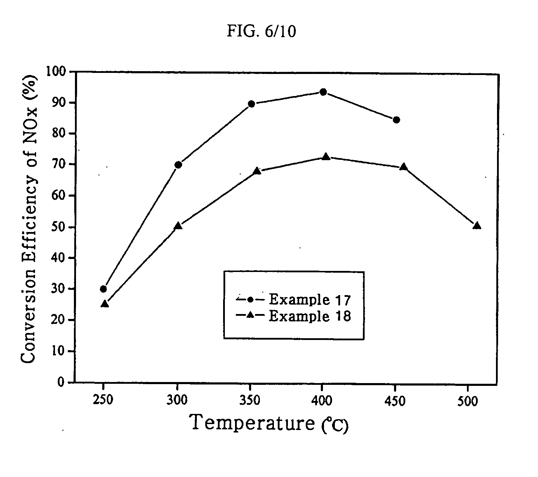

The composition of the exhaust gas fed into the reactor was described in Table 3. The results are shown in FIG. 6.

EXAMPLE 18

The procedure of example 7 was repeated except that the catalytic bed according to example 4 was used instead of the catalytic bed according to example 1, in an early stage 100% gasoline was used as the fuel and in a stable stage the internal combustion power plant using 90% LNG + 10% gasoline was used as the fuel instead of the LPG burner of the boiler, the molar ratio of ethanol to nitrogen oxides was 2, and the temperature in the reactor temperature ranged from 200 to 550°C. At this time, the flow rate of the exhaust gas was controlled in such a way that the space velocity was 20,000$h^{-1}$ at a hybrid mode (90% LNG + 10% gasoline) in which the composition and concentration of the exhaust gas were stable after the internal combustion power plant was operated.

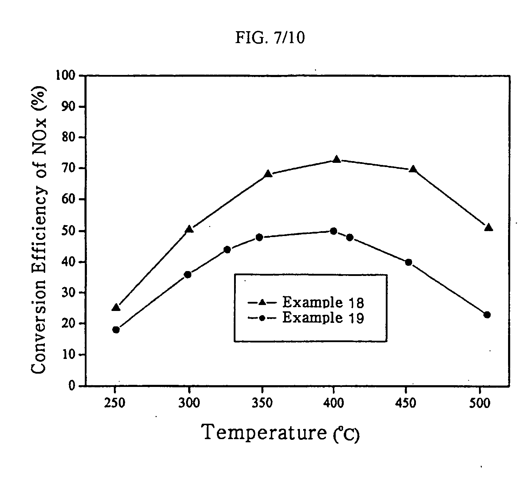

The composition of the exhaust gas fed into the reactor was described in Table 3. The results are shown in FIGs. 6 and 7.

From FIG. 6, it could be seen that the catalytic bed according to example 17 had a higher conversion efficiency of nitrogen oxides than the catalytic bed according to example 18 at 250 to 450°C. This meant that the sulfuric acid-treated catalytic bed (example 4) had a higher conversion efficiency of nitrogen oxides than the catalytic bed according to example 2 for every temperature region.

EXAMPLE 19

The procedure of example 7 was repeated except that the catalytic bed according to example 2 was used instead of the catalytic bed according to example 1, the exhaust gas discharged from the internal combustion power plant using 90% LNG + 10% gasoline as the fuel instead of the LPG burner of the boiler was used as a subjecting gas, the molar ratio of ethanol to nitrogen oxides was 1, and the temperature in the reactor ranged from 200 to 550°C. At this time, the flow rate of the exhaust gas was controlled in such a way that the space velocity was 20,000$h^{-1}$ at a hybrid mode (90% LNG + 10% gasoline) in which the composition and concentration of the exhaust gas were stable after the internal combustion power plant was operated.

The composition of the exhaust gas fed into the reactor was described in Table 3. The results are shown in FIG. 7.

From FIG. 7, it could be seen that the catalytic bed according to example 19 had a higher conversion efficiency of nitrogen oxides than the catalytic bed according to example 18 at 250 to 500°C. This meant that the conversion efficiency of nitrogen oxides increased with the increase of the molar ratio of ethanol to nitrogen oxides.

EXAMPLE 20

As shown in FIG. 1, a rectangular reactor made of SUS 304 with a height of 15 cm, a width of 15 cm, and a length of 100 cm was provided, and a tube with a plurality of nozzles was installed in the front part of the reactor.

The catalytic bed produced according to example 2 was installed at the rear of the tube including a plurality of nozzles, and then another set of catalytic bed and tube as above was installed in the rear part of the reactor.

Ethanol, acting as the reducing agent, was injected into a storage tank that was connected to an injection pump. The injection pump was connected to the tube with the nozzles.

An air pump was then connected to the tube with the nozzles and fed the high pressure air into the reactor.

Exhaust gas discharged from an internal combustion power plant using 90% LNG + 10% gasoline as the fuel and a separate nitrogen monoxide were fed into the front part of the reactor. The flow rates of the exhaust gas and nitrogen monoxide were controlled using a mass flow controller.

Compositions and concentrations of gases fed into the reactor were described in Table 3. Reaction conditions were controlled in such a way that the temperature in the reactor ranged from 200 to 500°C, and the space velocity was 20,000$h^{-1}$.

At this time, the molar ratio of ethanol sprayed into the exhaust gas through the tubes each, was 0.5 including a plurality of nozzles to nitrogen oxides. The procedure of analyzing the resulting product was conducted as the same procedure as example 7.

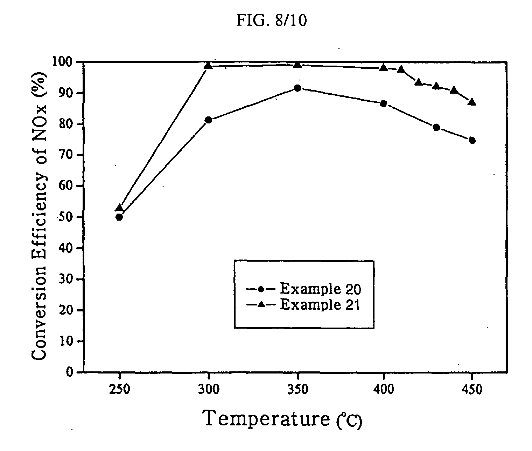

The results are shown in FIG. 8.

EXAMPLE 21

The procedure of example 20 was repeated except that the molar ratio of ethanol to nitrogen oxides for each tube was 1 instead of 0.5.

The results are shown in FIG. 8.

EXAMPLE 22

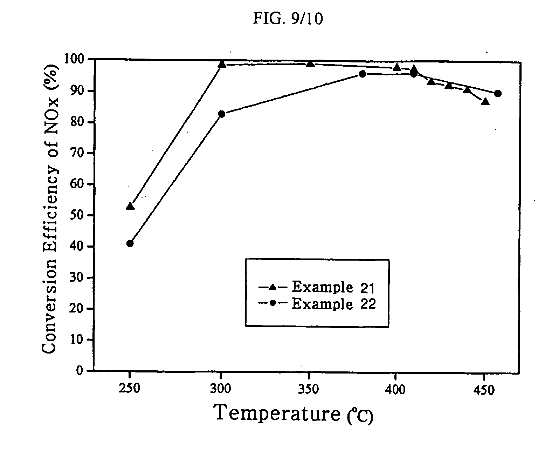

The procedure of example 20 was repeated except that 100% gasoline was used as a fuel of an internal combustion power plant instead of using a mixture of 90% LNG + 10% gasoline. A flow rate and composition of exhaust gas fed into a reactor were described in Table 4. The results are shown in FIG. 9.

TABLE 4

| Flow rate and composition of the exhaust gas | | | | | |
|---|---|---|---|---|---|
| Flow rate | Composition | | | | |
| | NOx | CO | $H_2O$ | $O_2$ | $SO_2$ |
| 90 $Nm^3h^{-1}$ | 1500 ppm | 1000 ppm | 6 % | 15 % | 50 ppm |

From FIG. 9, it could be seen that the catalytic beds according to examples 21 and 22 both have excellent conversion efficiency of nitrogen oxides at temperatures ranging from 300 to 450°C.

EXAMPLE 23

As shown in FIG. 1, a rectangular reactor [Gibo Co., Korea] made of SUS 304 with a height of 15 cm, a width of 15 cm, and a length of 100 cm was provided, and a tube with a plurality of nozzles [TN050-SRW, Total nozzle Co., Korea] was installed in the reactor.

The catalytic bed was installed according to example 1 at the rear of the tube having a plurality of nozzles in the reactor.

Ethanol [Duk-san Pharmaceutical Industry Co. Ltd., Korea] acting as the reducing agent was charged into a storage tank, the storage tank was connected to an injection pump [M930, Younglin Co., Korea], which was connected to the tube with the nozzles.

An air pump [HP 2.5, Air bank compressor Co., Korea] was then connected to the tube with the nozzles to feed the compressed air into the reactor.

Exhaust gas discharged from a LPG (liquefied petroleum gas) burner [Eg02.9R, Elco, Germany] of a boiler [Jewoo royal steam boiler, Jewoo energy, Korea] and nitrogen monoxide [Metson, USA] were fed into the reactor, and the flow rate of the exhaust gas and nitrogen monoxide was controlled by using a mass flow controller [F-201C-FAC-22-V, Bronchost, Netherlands].

The flow rate and a composition of the exhaust gas were described in Table 5, below.

TABLE 5

| Flow rate and composition of the exhaust gas | | | | |
|---|---|---|---|---|
| Flow rate | Composition | | | |
| | $N_2O$ | CO | $H_2O$ | $O_2$ |
| 90$Nm^3h^{-1}$ | 700 ppm | 1400 ppm | 6 % | 11% |

Meanwhile, when the exhaust gas fed into the reactor passed through the inlet pipe, high pressure air and ethanol were simultaneously fed to the nozzles using both the air pump and injection pump so as to be sprayed into the exhaust gas passing through the reactor.

At this time, the molar ratio of ethanol to nitrogen oxides fed into the reactor was controlled at 2, reaction conditions were controlled in such a way that the temperature in the reactor was 200 to 550°C, and the space velocity was 20,000$h^{-1}$.

Furthermore, the generation rate of $N_2O$ was calculated according to Equation 3.

Equation 3

$$N_2O\ convers.(\%) = \left[\frac{N_2O\ conc.\ before\ reaction - N_2O\ conc.\ after\ reaction}{N_2O\ conc.\ before\ reaction}\right]\times 100(\%)$$

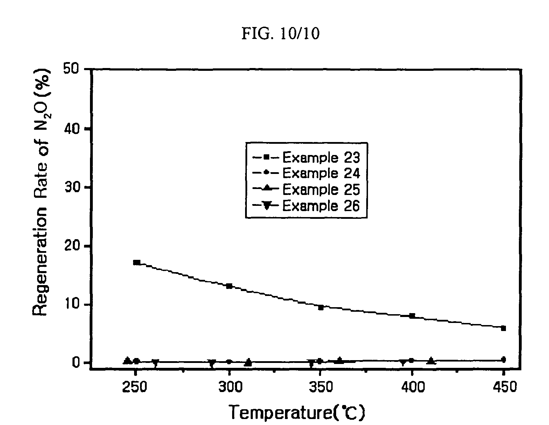

The results are shown in FIG. 10.

EXAMPLE 24

The procedure of example 23 was repeated except that the catalytic bed according to example 4 was used instead of using the catalytic bed according to example 1.
The results are shown in FIG. 10.

EXAMPLE 25

The procedure of example 23 was repeated except that the catalytic bed according to example 5 was used instead of using the catalytic bed according to example 1.
The results are shown in FIG. 10.

EXAMPLE 26

The procedure of example 23 was repeated except that the catalytic bed according to example 6 was used instead of using the catalytic bed according to example 1.
The results are shown in FIG. 10.
From FIG. 10, it could be seen that the sulfuric acid-treated catalytic beds according to examples 24 and 26 have lower generation rate of $N_2O$ than the catalytic bed according to example 23 at temperatures ranging from 200 to 500°C.

Industrial Applicability

As described above, the present invention is advantageous in that the procedure of producing a catalytic bed is varied depending on the conditions of exhaust gas from a stationary and mobile source using gases or liquid oils such as gasoline, kerosene or bio-diesel oil as a fuel. The present invention is effective to reduce nitrogen oxides by spraying the reducing agent into the exhaust gas according to a multi-injection manner to convert nitrogen oxides to nitrogen and water in the presence of the catalytic bed.
Another advantage of the present invention is that the relatively low conversion efficiency of nitrogen oxides by the oxidation of ethanol used as the reducing agent in a conventional HC-SCR process can be improved.
The present invention has been described in an illustrative manner, and it is to be understood that the terminology used is intended to be in the nature of description rather than of limitation. Many modifications and variations of the present invention are possible in light of the above teachings. Therefore, it is to be understood that within the scope of the appended claims, the invention may be practiced otherwise than as specifically described.

## Claims

**1.** A catalyst for reducing nitrogen oxides in which an alumina carrier supports silver.

**2.** The catalyst as set forth in claim 1, which is further treated with sulfuric acid.

**3.** The catalyst as set forth in claim 2, wherein the treatment of the catalyst with the sulfuric acid is performed by placing the catalyst in 0.01 to 1 M sulfuric acid aqueous solution, prior to drying and calcining the catalyst, or by allowing the catalyst to continuously come into contact with a flow of sulfur dioxide.

**4.** The catalyst as set forth in any one of claims 1 to 3, wherein the nitrogen oxides comprise NOx, $N_2O$.

**5.** The catalyst as set forth in any one of claims 1 to 3, wherein the alumina carrier is 0.05 to 0.3 g/cm$^3$.

**6.** The catalyst as set forth in any one of claims 1 to 3, wherein the silver is 0.1 to 10 wt% based on the alumina carrier.

**7.** The catalyst as set forth in any one of claims 1 to 3, wherein the alumina carrier has a crystalline structure selected from the group consisting of an amorphous structure, a gamma-type structure, a theta-type structure, an eta-type structure, and a mixture thereof.

**8.** The catalyst as set forth in any one of claims 1 to 3, wherein the silver is provided in a form of reduced silver, silver oxide, silver chloride, silver nitrate, silver sulfate, or a mixture thereof.

**9.** The catalyst as set forth in any one of claims 1 to 3, being supported by one of the structure selected from the group consisting of a metal plate, a back filter, a ceramic filter, a ceramic honeycomb, and a ceramic cordierite honeycomb.

**10.** The catalyst as set forth in any one of claims 1 to 3, being formed as a shape selected from the group consisting of a sphere, a pellet, and a honeycomb.

**11.** An apparatus for treating nitrogen oxides, comprising:

an inlet pipe to receive exhaust gas;
a reactor connected to the inlet pipe and including:

one or more nozzles which are connected to the inlet pipe to spray air and a reducing agent to the exhaust gas inlet into the reactor through the inlet pipe; and
one or more catalytic bed installed at the rear of the nozzle to reduce nitrogen oxides from the exhaust gas laden with the reducing agent;
a storage tank to store therein the reducing agent to be sprayed by the nozzle;
an injection pump installed between the storage tank and the nozzle to transport the reducing agent from the storage tank to the nozzle;
an air pump connected to the nozzle to feed air into the nozzle; and
an outlet pipe discharges the exhaust gas after the exhaust gas passes through and is treated by the catalytic bed.

**12.** The apparatus as set forth in claim 11, wherein the catalytic bed for reducing nitrogen oxides comprises the catalyst according to any one of claims 1 to 9.

**13.** The apparatus as set forth in claim 11, wherein one or more tubes each including one or more nozzles are installed in the reactor in a single- or multi-injection manner, and the catalytic bed is installed at the rear of each of the tubes, so that the air and reducing agent are sprayed into the exhaust gas through the tubes.

**14.** The catalyst as set forth in any one of claims 11 to 13, wherein the nitrogen oxides comprise NOx, $N_2O$.

**15.** The apparatus as set forth in any one of claims 11 to 13, further comprising:

a valve installed at each of the tube to control the flow rate of a fluid passing through the tube;
one or more concentration sensors installed in the inlet pipe, the reactor, and the outlet pipe to sense a concentration of nitrogen oxides contained in the exhaust gas flowing in the inlet pipe, the reactor, and the outlet pipe; and
a control unit connected to the concentration sensor and valve to control the valve based on concentration data output from the concentration sensor.

**16.** The apparatus as set forth in any one of claims 11 to 13, wherein the reducing agent is selected from the group consisting of unsaturated hydrocarbon, heterogeneous hydrocarbon and a mixture thereof.

**17.** A method of treating nitrogen oxides using the apparatus according to any one of claims 11 to 16.

FIG. 1/10

8
10
4
10
2
6
18
18
16
12
14

FIG. 2/10

8
10
4
10
2
6
24
24
22
18
18
16
20
12
14

FIG. 3/10

Conversion Efficiency of NOx (%)
Temperature (℃)
Example 7
Example 8
Example 9
0
10
20
30
40
50
60
70
80
90
100
200
250
300
350
400
450
500

FIG. 4/10

Conversion Efficiency of NOx (%)
100
90
80
70
60
50
40
30
20
10
0
Example 10
Example 11
Example 12
200
250
300
350
400
450
500
Temperature (℃)

FIG. 5/10

Conversion Efficiency of NOx (%)
Concerntration of NOx (ppm)
100
90
80
70
60
50
40
30
20
10
0
400
350
300
250
200
150
100
50
0
—▲— inlet con. of NOx
—■— outlet con. of NOx
Example13
Example 14
Example 15
Example 16

FIG. 6/10

Conversion Efficiency of NOx (%)
100
90
80
70
60
50
40
30
20
10
0
Example 17
Example 18
250
300
350
400
450
500
Temperature (℃)

FIG. 7/10

100
90
80
70
60
50
40
30
20
10
0
Conversion Efficiency of NOx (%)
250
300
350
400
450
500
Temperature (℃)
Example 18
Example 19

FIG. 8/10

Conversion Efficiency of NOx (%)
100
90
80
70
60
50
40
30
20
10
0
250
300
350
400
450
Temperature (℃)
Example 20
Example 21

FIG. 9/10

Conversion Efficiency of NOx (%)
100
90
80
70
60
50
40
30
20
10
0
250
300
350
400
450
Temperature (℃)
Example 21
Example 22

FIG. 10/10

Regeneration Rate of N2O (%)
50
40
30
20
10
0
Example 23
Example 24
Example 25
Example 26
250
300
350
400
450
Temperature(℃)

European Patent Office

# EUROPEAN SEARCH REPORT

Application Number
EP 04 01 0537

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 526 099 A (RIKEN KK ; AGENCY IND SCIENCE TECHN (JP)) 3 February 1993 (1993-02-03) * page 4, line 45 - page 5, line 4; claims 1-18; figure 1 * | 1,4-17 | B01D53/86 B01D53/94 B01J23/50 B01J37/20 |
| X | US 5 801 117 A (MIYADERA TATSUO ET AL) 1 September 1998 (1998-09-01) * column 3, line 59 - line 64; claims 1-4; example 7 * | 1-10 | |
| X | EP 0 562 866 A (NIPPON CATALYTIC CHEM IND ; TOKYO GAS CO LTD (JP)) 29 September 1993 (1993-09-29) * figures 1-14 * | 11,13, 15,17 | |
| X | US 6 093 380 A (LAGANA VINCENZO ET AL) 25 July 2000 (2000-07-25) * figure 2 * | 11, 13-15,17 | |

TECHNICAL FIELDS SEARCHED (Int.Cl.7)
B01D
B01J

The present search report has been drawn up for all claims

| Place of search | Date of completion of the search | Examiner |
|---|---|---|
| Munich | 19 August 2004 | Eijkenboom, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 04 01 0537

This annex lists the patent family members relating to the patent documents cited in the above-mentioned European search report. The members are as contained in the European Patent Office EDP file on
The European Patent Office is in no way liable for these particulars which are merely given for the purpose of information.

19-08-2004

| Patent document cited in search report | | Publication date | Patent family member(s) | | | Publication date |
|---|---|---|---|---|---|---|
| EP 0526099 | A | 03-02-1993 | JP | 2516145 | B2 | 10-07-1996 |
| | | | JP | 5317647 | A | 03-12-1993 |
| | | | JP | 5092124 | A | 16-04-1993 |
| | | | JP | 5076757 | A | 30-03-1993 |
| | | | JP | 5092125 | A | 16-04-1993 |
| | | | JP | 6096094 | B | 30-11-1994 |
| | | | DE | 69222488 | D1 | 06-11-1997 |
| | | | DE | 69222488 | T2 | 05-02-1998 |
| | | | EP | 0526099 | A1 | 03-02-1993 |
| | | | EP | 0679427 | A1 | 02-11-1995 |
| | | | US | 5534237 | A | 09-07-1996 |
| | | | JP | 6007641 | A | 18-01-1994 |
| | | | JP | 6071175 | A | 15-03-1994 |
| US 5801117 | A | 01-09-1998 | JP | 3371127 | B2 | 27-01-2003 |
| | | | JP | 6198130 | A | 19-07-1994 |
| | | | JP | 6198131 | A | 19-07-1994 |
| | | | JP | 6262078 | A | 20-09-1994 |
| | | | JP | 6327974 | A | 29-11-1994 |
| | | | US | 5714432 | A | 03-02-1998 |
| | | | DE | 69309245 | D1 | 30-04-1997 |
| | | | DE | 69309245 | T2 | 03-07-1997 |
| | | | EP | 0605237 | A1 | 06-07-1994 |
| | | | US | 5656249 | A | 12-08-1997 |
| | | | US | 5772973 | A | 30-06-1998 |
| EP 0562866 | A | 29-09-1993 | JP | 3499576 | B2 | 23-02-2004 |
| | | | JP | 5269348 | A | 19-10-1993 |
| | | | JP | 3513162 | B2 | 31-03-2004 |
| | | | JP | 5269351 | A | 19-10-1993 |
| | | | JP | 3513163 | B2 | 31-03-2004 |
| | | | JP | 5269349 | A | 19-10-1993 |
| | | | DE | 69318461 | D1 | 18-06-1998 |
| | | | DE | 69318461 | T2 | 17-12-1998 |
| | | | EP | 0562866 | A1 | 29-09-1993 |
| | | | KR | 9611040 | B1 | 16-08-1996 |
| | | | US | 6432373 | B1 | 13-08-2002 |
| US 6093380 | A | 25-07-2000 | US | 6616901 | B1 | 09-09-2003 |

EPO FORM P0459

For more details about this annex : see Official Journal of the European Patent Office, No. 12/82